# EUROPEAN PATENT APPLICATION

(11) **EP 2 067 416 A1**
(43) Date of publication of application: **10.06.2009**
(21) Application number: 08163294.5
(22) Date of filing: 29.08.2008
(51) Int. Cl.: A45D 31/00, B29C 33/40

(54) **Mold for making nail decorations**

(30) Priority: 06.12.2007 US 951930
(71) Applicant: Wang, Li-Jhen, Situn District Taichung City 407 (TW)
(72) Inventor: Wang, Li-Jhen, Situn District Taichung City 407 (TW)
(74) Representative: Lermer, Christoph

(57) **Abstract**

Disclosed is a mold (10) for making nail decorations (22). The mold includes at least one cavity (11) defined therein for receiving solvent that will cure and become a nail decoration (22). Then, the mold (10) can be bent to release the nail decoration (22) from the cavity (11). Finally, the nail decoration (22) can be attached to a nail.

## Description

### BACKGROUND OF INVENTION

### 1. FIELD OF INVENTION

The present invention relates to a mold for making nail decorations.

### 2. RELATED PRIOR ART

Some people use nail polish to polish their nails for aesthetic purposes. The nail polish is two-dimensional.

Some other people would like to wear three-dimensional decorations on their nails. Conventionally, a person uses a tool to dip in solvent and crystal-like powder and then transfers the mixture of the solvent with the crystal-like powder onto a nail. After the solvent cures, the person puts more mixture on the previous amount of mixture. This process is repeated several times to build a three-dimensional decoration on the nail layer by layer. It takes a lot of time and therefore costs a lot of money to provide such three-dimensional decorations on nails.

Therefore, the present invention is intended to obviate or at least alleviate the problems encountered in prior art.

### SUMMARY OF INVENTION

The primary objective of the present invention is to provide inexpensive three-dimensional decorations for nails.

According to the present invention, there is provided a mold including at least one cavity defined therein for receiving solvent. The solvent will cure and become a nail decoration. Then, the mold can be bent to release the nail decoration from the cavity. Finally, the nail decoration can be attached to a nail.

Other objectives, advantages and features of the present invention will become apparent from the following description referring to the attached drawings.

### BRIEF DESCRIPTION OF DRAWINGS

The present invention will be described via the detailed illustration of two embodiments referring to the drawings.
Fig. 1 is a perspective view of a mold for making nail decorations according to the first embodiment of the present invention.
Fig. 2 is a perspective view of solvent filled in some cavities defined in the mold shown in Fig. 1.
Fig. 3 is a cross-sectional view of the mold of Fig. 2 bent for releasing nail decorations from the cavities.
Fig. 4 is a perspective view of one of the nail decorations of Fig. 3 about to be attached to a nail.
Fig. 5 is a perspective view of a mold for making nail decorations according to a second embodiment of the present invention.

### DETAILED DESCRIPTION OF EMBODIMENTS

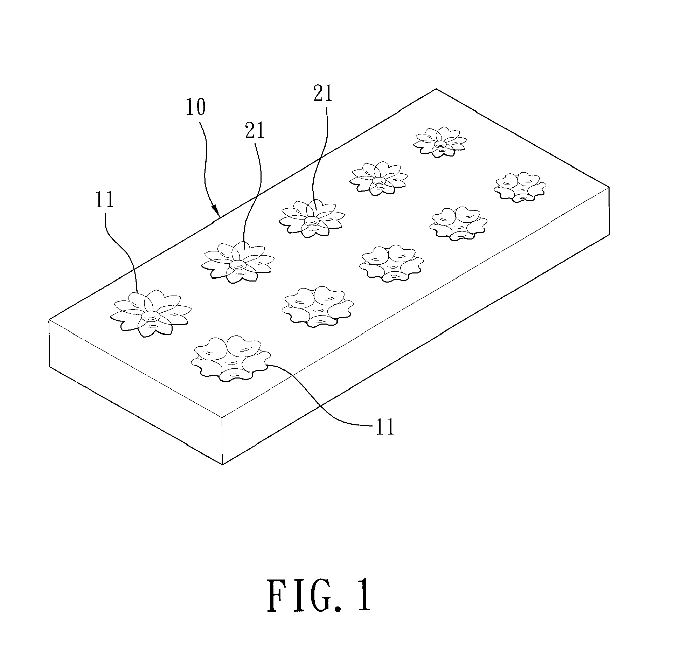

Referring to Fig. 1, shown is a mold 10 for making three-dimensional decorations for nails according to a first embodiment of the present invention. The mold 10 includes two rows of cavities 11 defined therein. In each row, the cavities 11 are made of a same shape but different sizes. The mold 10 is preferably elastic. To this end, the mold 10 is made of rubber. However, the mold 10 may be made of plastics or metal. The mold 10 can therefore be made at a low cost and in a large amount.

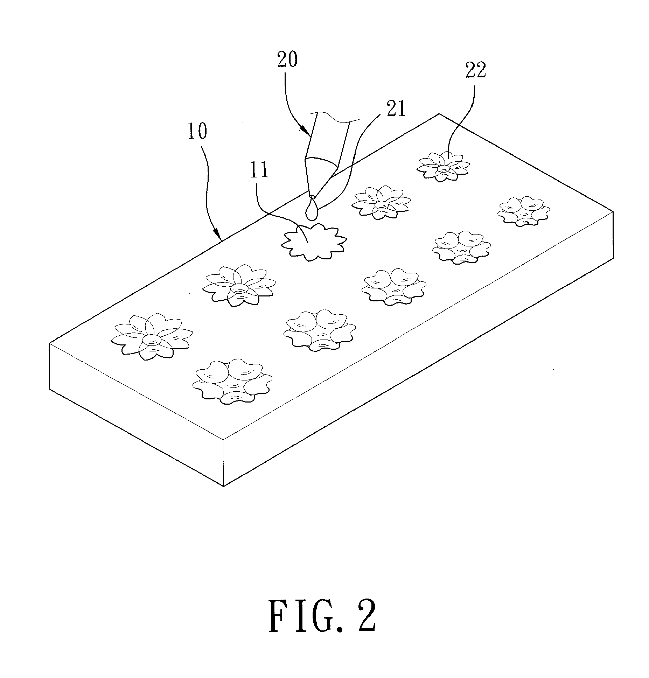

Referring to Fig. 2, an injector 20 is used to transfer mixture 21 into the cavities 11. The mixture 21 will cure and become a plurality of three-dimensional decorations 22. The mixture 21 is made via mixing solvent with crystal-like powder to provide a glistering effect. The mixture 21 may be made via mixing solvent with clay to provide a different effect.

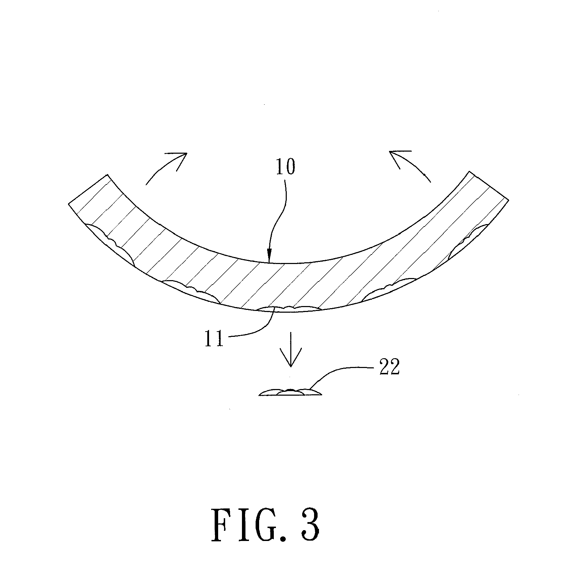

Referring to Fig. 3, the mold 10 is bent in a direction marked by two arrowheads, thus releasing the three-dimensional decorations 22 from the cavities 11.

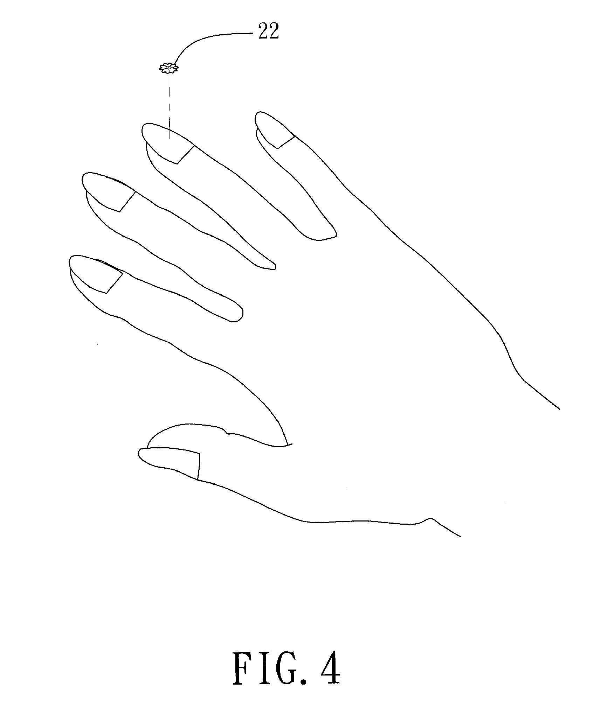

Referring to Fig. 4, the three-dimensional decorations 22 can easily be attached to nails by nail polish for example. The three-dimensional decorations 22 can be provided on nails quickly and inexpensively.

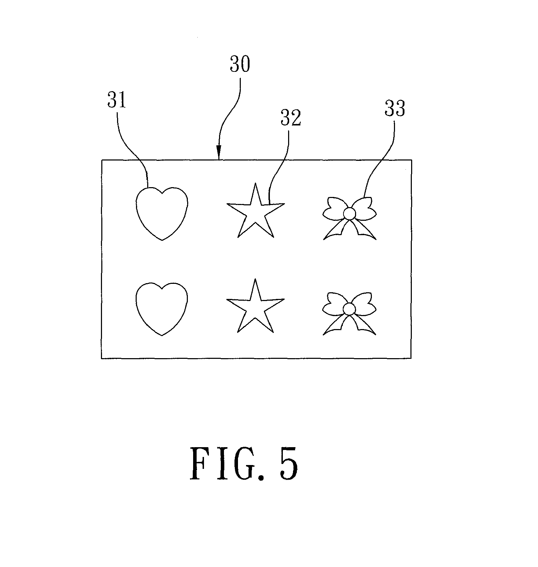

Referring to Fig. 5, there is shown a mold 30 for making three-dimensional decorations for nails according to a second embodiment of the present invention. The mold 30 includes a first pair of identical cavities 31, a second pair of identical cavities 32 and a third pair of identical cavities 33.

The present invention has been described via the detailed illustration of the embodiments. Those skilled in the art can derive variations from the embodiments without departing from the scope of the present invention. Therefore, the embodiments shall not limit the scope of the present invention defined in the claims.

## Claims

1. A mold for making nail decorations, the mold comprising at least one cavity defined therein for receiving solvent that will cure and become a nail decoration, wherein the mold can be bent to release the nail decoration from the cavity.

2. The mold according to claim 1, wherein the mold comprises a plurality of cavities defined therein.

3. The mold according to claim 2, wherein the cavities are made of different shapes.

4. The mold according to claim 2, wherein the cavities are made of different sizes.

5. The mold according to claim 1, wherein the mold is made of rubber.

6. The mold according to claim 1, wherein the mold is made of plastic.

7. The mold according to claim 1, wherein the mold is made of metal.
